# FASCICULE DE BREVET EUROPEEN

(11) **EP 0 493 153 B1**
(45) Date de publication et mention de la délivrance du brevet: **01.09.1993**
(21) Numéro de dépôt: 91403236.2
(22) Date de dépôt: 29.11.1991
(51) Int. Cl.: B60T 8/48

(54) **Système d'anti-patinage pour véhicule automobile**
Antischlupfsystem für Kraftfahrzeuge
Anti-slip system for motor vehicles

(30) Priorité: 20.12.1990 FR 9016024
(43) Date de publication de la demande: 01.07.1992
(73) Titulaire: ALLIEDSIGNAL EUROPE SERVICES TECHNIQUES, 93700 Drancy (FR)
(72) Inventeur: Kervagoret, Gilbert, Bendix Europe, F-93700 Drancy (FR)

(56) Documents cités:
- EP-A- 0 376 788
- WO-A-88/09278
- FR-A- 2 644 417
- GB-A- 2 218 480
- PATENT ABSTRACTS OF JAPAN vol. 14, no. 157 (M-955)(4100) 27 Mars 1990

## Description

La présente invention concerne un système d'anti-patinage des roues motrices et de freinage, pour véhicule automobile, dont le système de freinage comporte deux sous-circuits hydrauliques reliant chacun le moteur de frein d'une roue motrice et le moteur de frein d'une roue libre à une chambre de travail d'un maître-cylindre relié à un réservoir général de fluide sous basse pression et inclut un dispositif d'antiblocage des roues au freinage comportant, pour chacune des roues, une électrovalve à trois voies ouvrant normalement une communication entre une entrée de fluide sous pression et le moteur de frein associé à cette roue, tandis qu'en phase de détente du dispositif d'antiblocage elle ferme cette communication et relie le moteur de frein de cette roue à un réservoir de fluide sous basse pression spécifique à chaque sous-circuit, et deux tiroirs de commutation par sous-circuit isolant les moteurs de frein de la chambre de travail du maître-cylindre lors du fonctionnement de la pompe associée au dispositif d'antiblocage, ladite pompe aspirant en antiblocage le fluide audit réservoir spécifique, ledit système d'anti-patinage de roues motrices et de freinage comprenant une valve différentielle pour chaque roue libre ou motrice, essentiellement constituée par l'un desdits tiroirs dont une face reçoit la pression régnant dans le moteur de frein associé et l'autre celle engendrée par la pompe, mettant en communication au repos la chambre de travail du maître-cylindre et ladite entrée de fluide sous pression de l'électrovalve.

Un tel système est connu et par exemple décrit dans le document EP-A-0 376 788.

Un problème commun aux dispositifs de freinage dotés d'une fonction de freinage automatique, pour éviter par exemple le patinage de roues, concerne la conception des interactions entre le mode de freinage automatique et le mode de freinage commandé par le conducteur du véhicule par actionnement de la pédale de frein.

Plus précisément, la difficulté essentielle réside dans le caractère contradictoire de plusieurs impératifs, en particulier la nécessité d'assurer à tout moment, pour des raisons de sécurité, la prédominance du mode de freinage commandé sur le mode de freinage automatique et la nécessité d'assurer cette prédominance par des moyens aussi simples que possible, cette simplicité assurant à la fois une réduction des coûts des systèmes de freinage concernés et une augmentation de leur fiabilité.

La présente invention a précisément pour but de proposer une optimisation de ces systèmes, tant sur le plan de la diminution des coûts, que de l'augmentation de la fiabilité.

A cette fin, le dispositif de l'invention est essentiellement caractérisé en ce qu'il comprend, pour chaque sous-circuit, en plus des éléments précédemment mentionnés, une valve différentielle à pression-dépression qui est commandée par la pression régnant dans le moteur de frein associé à la roue libre et qui ferme au repos une communication entre la chambre de travail du maître-cylindre et l'entrée d'aspiration de la pompe, communication qu'elle ouvre en cas de dépression dans le moteur de frein correspondant si et seulement s'il n'y a pas de pression engendrée par le maître-cylindre.

La présente invention sera mieux comprise et d'autres buts, avantages et caractéristiques de celle-ci apparaîtront plus clairement à la lecture de la description qui suit d'un mode de réalisation donné à titre non limitatif et à laquelle sont jointes deux planches de dessin sur lesquelles :
- La Figure 1 représente schématiquement un système de freinage incluant l'invention,
- Les Figures 2 et 3 représentent schématiquement et partiellement deux modes de réalisation d'une valve différentielle à pression-dépression utilisée dans le système de la Figure 1.

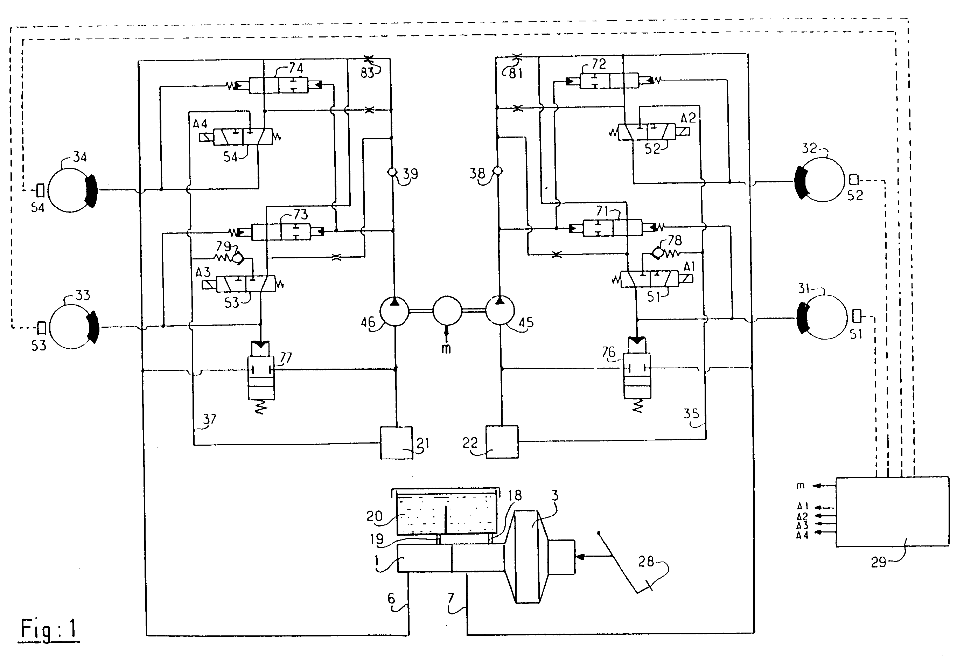

En référence maintenant à la Figure 1, le circuit de freinage comporte, de façon classique, un servofrein pneumatique 3 actionné par une pédale 28. Le servofrein 3 actionne un maître-cylindre tandem 1 schématiquement représenté, dont les deux chambres sont alimentées en liquide sous basse pression par un réservoir 20 par l'intermédiaire respectivement des conduits 19 et 18. Les conduits 6 et 7 de sortie respectivement des deux chambres du maître-cylindre 1 déterminent les deux sous-circuits hydrauliques dits respectivement secondaire et primaire.

Le conduit 6 - respectivement 7 - est relié au repos aux moteurs de frein 34, 33 - respectivement 32, 31 - d'une roue motrice (34, 32) et d'une roue libre (33, 31), par l'intermédiaire d'une valve différentielle 74, 73 - respectivement 72, 71 - et d'une électrovalve à trois voies et deux positions 54, 53 - respectivement 52, 51 -. Lorsqu'elles sont excitées, les électrovalves 54, 53 - respectivement 52, 51 - interrompent la liaison précitée et mettent en communication le moteur de frein associé 34, 33 - respectivement 32, 31 - avec un réservoir spécifique de contenance réduite, spécifiquement une capacité 21 - respectivement 22 - par l'intermédiaire d'un conduit 37 - respectivement 35 -.

Cette excitation est commandée par une unité centrale 29 électrique en cas de détection d'un risque de blocage par les capteurs correspondants S4 à S1 associés chacun à une roue.

Lors d'une telle détection, l'unité centrale 29 assure la mise en route du moteur M d'entraînement des pompes 46, 45 par le conducteur électrique m. Ces pompes aspirent le liquide détendu dans la capacité 21, 22 pour délivrer un liquide sous pression, par l'intermédiaire d'un clapet anti-retour 39, 38 aux moteurs de frein concernés 34, 33, 32, 31 quand l'électrovalve associée 54, 53, 52, 51 est revenue en position de repos.

Les valves différentielles 74 à 71 sont associées à chacune des roues. Elles sont constituées par un tiroir sur l'une des faces duquel on applique la pression régnant dans le moteur de frein associé 34 à 31 et sur l'autre face la pression de sortie de la pompe 46, 45. Au repos, elles assurent une communication entre les chambres de travail du maître-cylindre 1, et l'entrée du fluide sous pression des électrovalves 54 à 51. Lorsque la pompe 46, 45 est mise en marche, la pression coupe cette communication, isolant donc le moteur de frein de la chambre de travail du maître-cylindre 1.

Une valve anti-retour 79, 78 est disposée dans le circuit de détente issu de l'électrovalve 53, 51 associée à la roue libre.

Une valve différentielle à pression-dépression 77, 76 est également associée à chaque roue libre. Au repos, cette dernière valve coupe une communication entre la chambre de travail du maître-cylindre et l'entrée d'aspiration de la pompe 46, 45. Cette valve est commandée par une dépression régnant dans le moteur de frein 33, 31 associé à la roue libre, pour ouvrir cette communication si et seulement s'il n'y a pas de pression dans la chambre de travail correspondante du maître-cylindre 1.

Ainsi, en freinage normal, les valves sont au repos comme représenté. Le fluide de freinage circule de la chambre de travail au moteur de frein par l'intermédiaire d'une valve différentielle 74, 73, 72, 71, et d'une électrovalve 54, 53, 52, 51.

En cas d'imminence d'un blocage d'une roue, l'électrovalve concernée est excitée, et la pompe est mise en marche. Ceci a pour effet d'isoler les moteurs de frein du maître-cylindre grâce aux valves différentielles 74, 73, 72, 71. La valve différentielle 77, 76 à pression-dépression reste dans son état de repos puisqu'une pression est engendrée dans le maître-cylindre. Les cycles habituels d'antiblocage peuvent donc se produire normalement.

Le liquide dans le moteur de frein concerné va se détendre dans la capacité associée, d'où il est aspiré par la pompe pour être renvoyé au maître-cylindre par l'intermédiaire de la restriction 83, 81 pendant la phase détente puis ré-appliqué par le maître-cylindre et la pompe pendant l'admission suivante.

En cas de défaillance de la pompe, le maître-cylindre reste en communication avec les moteurs de frein, seul le liquide contenu dans la capacité concernée devient inutile et le véhicule peut encore être freiné au prix d'une course légèrement plus importante de la pédale de frein 28.

En anti-patinage, l'électrovalve 53, 51 associée à une roue libre est excitée et le moteur de pompe mis en marche. Il y a alors communication entre le moteur de frein 33, 31 de la roue libre et le conduit 37, 35 menant à l'entrée d'aspiration de la pompe 46, 45 par l'intermédiaire de la valve anti-retour 79, 78. Il en résulte une dépression dans le moteur de frein concerné 33, 31, sans élévation de pression dans le maître-cylindre. Cette dépression entraîne le déplacement de la valve différentielle à pression-dépression 77, 76 qui ouvre alors la communication entre la chambre de travail du maître-cylindre 1 et l'entrée d'aspiration de la pompe 46, 45. La pompe peut alors aspirer le fluide dans le réservoir 20 et le délivrer sous pression au moteur de frein concerné 34, 32, l'électrovalve 54, 52 n'étant pas excitée, et la valve différentielle 74, 72 isolant le moteur de frein concerné du maître-cylindre.

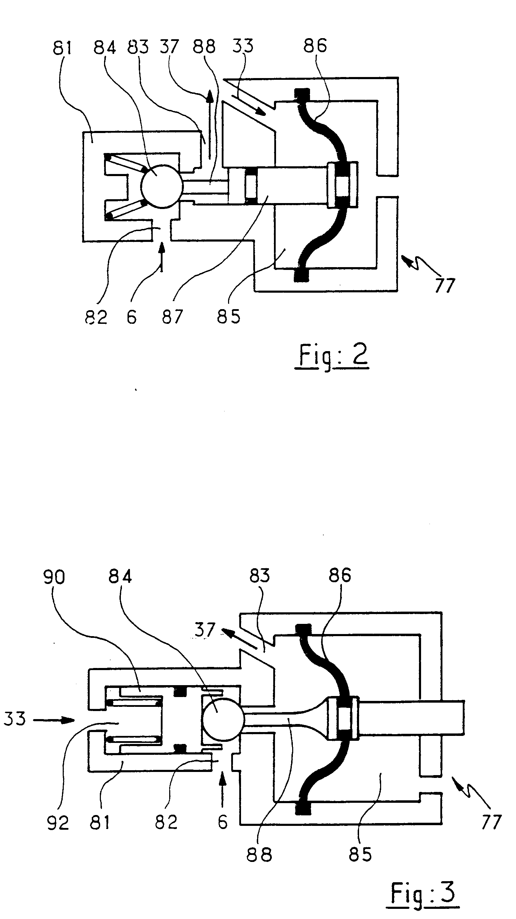

Figure 2 est représentée schématiquement une valve différentielle à pression-dépression que l'on peut utiliser dans un tel système.

On la décrira en liaison avec le sous-circuit dit secondaire. Cette valve comporte dans un corps 81, un orifice 82 reliée au conduit 6 menant à la chambre de travail du maître-cylindre 1. Un orifice 83 est relié au conduit 37 menant à l'entrée d'aspiration de la pompe 46.

Un clapet constitué par une bille 84 chargé par un ressort interdit toute communication au repos entre ces deux orifices 82, 83.

Une chambre 85 est séparée en deux parties étanches l'une par rapport à l'autre par une membrane flexible 86. L'une des parties de cette chambre est reliée à l'atmosphère et l'autre reçoit la pression régnant dans le moteur de frein associé 33.

Un piston 87 traversant un alésage pratiqué dans le corps 81 en regard de la bille 84 d'une part porte une aiguille 88 en regard de la bille 84, et d'autre part est fixé à la membrane 86.

Ainsi, en cas de dépression dans le moteur de frein 33, le piston 87 se meut vers la gauche sur la Figure 2 et ouvre la communication entre le maître-cylindre et l'entrée d'aspiration de la pompe 46.

Si une pression est engendrée dans le maître-cylindre, la bille 84 reste collée sur son siège interdisant ainsi cette communication.

Figure 3, on a représenté schématiquement un autre mode de réalisation d'une valve différentielle à pression-dépression. Dans ce mode de réalisation, la pression régnant dans le moteur de frein 33 de la roue libre est appliquée à un piston 90 portant la bille 84 formant clapet. Ainsi, si une pression apparaît dans le moteur de frein 33 de la roue libre, la communication entre l'entrée d'aspiration 37 de la pompe et le conduit 6 de sortie du maître-cylindre ne peut pas s'établir.

Par contre, en période d'anti-patinage, il s'établit une dépression dans le moteur de frein 33 de la roue libre puisque celui-ci alors est connecté à l'entrée d'aspiration de la pompe par l'intermédiaire de l'électrovalve correspondante 53. Cette dépression s'établit alors également dans la chambre 92 ménagée derrière le piston 90. La mise en marche de la pompe établit également une dépression dans la partie de la chambre 85 non reliée à l'atmosphère, et l'aiguille 88 qui est liée à la membrane 86 ouvre sans effort le clapet 84, établissant la communication requise entre le conduit 37 d'aspiration de la pompe et le conduit 6 de sortie du maître-cylindre.

Ce mode de réalisation permet de ne pas soumettre la membrane 86 à la pression régnant dans le moteur de frein 33 de la roue libre. En outre, il permet d'éviter l'emploi des valves anti-retour 79, 78.

Cette réalisation d'un système de freinage permet notamment de s'affranchir de détecter, par un moyen électrique, la volonté du conducteur de freiner.

On aura compris que de nombreux changements et modifications pourront être apportés par l'homme du métier à la présente invention sans sortir du cadre des revendications annexées.

## Revendications

1. Système d'anti-patinage des roues motrices et de freinage, pour véhicule automobile, dont le système de freinage comporte deux sous-circuits hydrauliques reliant chacun le moteur de frein (32, 34) d'une roue motrice et le moteur de frein (31, 33) d'une roue libre à une chambre de travail d'un maître-cylindre (1) relié à un réservoir général (20) de fluide sous basse pression et inclut un dispositif d'antiblocage des roues au freinage comportant, pour chacune des roues, une électrovalve à trois voies (51-54) ouvrant normalement une communication entre une entrée de fluide sous pression et le moteur de frein associé à cette roue, tandis qu'en phase de détente du dispositif d'antiblocage elle ferme cette communication et relie le moteur de frein de cette roue à un réservoir (21, 22) de fluide sous basse pression spécifique à chaque sous-circuit, et deux tiroirs de commutation par sous-circuit isolant les moteurs de frein de la chambre de travail du maître-cylindre lors du fonctionnement de la pompe (45, 46) associée au dispositif d'antiblocage, ladite pompe aspirant en antiblocage le fluide audit réservoir spécifique (21, 22), ledit système d'anti-patinage de roues motrices et de freinage comprenant une valve différentielle (71-74) pour chaque roue libre ou motrice, essentiellement constituée par l'un desdits tiroirs dont une face reçoit la pression régnant dans le moteur de frein associé (31-34) et l'autre celle engendrée par la pompe (45, 46), mettant en communication au repos la chambre de travail du maître-cylindre (1) et ladite entrée de fluide sous pression de l'électrovalve, caractérisé en ce qu'il comprend en outre, par sous-circuit, une valve différentielle à pression-dépression (76, 77) qui est commandée par la pression régnant dans le moteur de frein associé à la roue libre et qui ferme au repos une communication entre la chambre de travail du maître-cylindre (1) et l'entrée d'aspiration de la pompe (45, 46), communication qu'elle ouvre en cas de dépression dans le moteur de frein (31, 33) correspondant si et seulement s'il n'y a pas de pression engendrée par le maître-cylindre (1).

2. Système d'anti-patinage selon la revendication 1, caractérisé en ce que la dite valve différentielle à pression-dépression comporte, dans un corps (81) un orifice (82) relié à la chambre de travail du maître-cylindre et un orifice (83) relié à l'entrée d'aspiration de la pompe (46, 45) entre lesquels un clapet (84) ferme au repos une communication, une chambre (85) séparée en deux parties par une membrane flexible (86), l'une étant reliée à l'atmosphère, l'autre au moteur de frein correspondant (33, 31), un piston (87) traversant un alésage pratiqué en regard du dit clapet (84) et fixé à la dite membrane (86) étant susceptible d'ouvrir le clapet (84) en cas de dépression dans le moteur de frein associé (33, 31) s'il n'y a pas de pression à l'orifice (82) relié au maître-cylindre (1).

3. Système d'anti-patinage selon la revendication 2, caractérisé en ce qu'une valve anti-retour (79, 78) est disposée entre l'électrovalve à trois voies (53, 51) associée au moteur de frein (33, 31) d'une roue libre et le dit réservoir spécifique (21, 22).

4. Système d'anti-patinage selon la revendication 1, caractérisé en ce que la dite valve différentielle à pression-dépression comporte, dans un corps (81) un orifice (82) relié à la chambre de travail du maître-cylindre et un orifice (83) relié à l'entrée d'aspiration de la pompe (46, 45) entre lesquels un clapet (84) ferme au repos une communication, une chambre (85) séparée en deux parties par une membrane flexible (86), l'une étant reliée à l'atmosphère, l'autre à l'entrée d'aspiration (37, 35) de la pompe correspondante, un piston (90) portant le dit clapet (84) et étant chargé par la pression régnant dans le moteur de frein (33, 31) de la dite roue libre, une aiguille (88) fixée à la dite membrane (86) étant susceptible d'ouvrir le clapet (84) en cas de dépression dans le moteur de frein associé (33, 31) lorsque la pompe (46, 45) se met en marche.

## Claims

1. Anti-skid system for the driving and braking wheels of a motor vehicle, the brake system of which comprises two hydraulic sub-circuits each connecting the brake motor (32, 34) of a driving wheel and the brake motor (31, 33) of a free wheel to a working chamber of a master cylinder (1) connected to a general reservoir (20) of fluid under low pressure, and includes a wheel anti-lock braking device comprising, for each of the wheels, a three-way solenoid valve (51-54) normally opening a communication between an inlet of fluid under pressure and the brake motor associated with this wheel, whilst, in the expansion phase of the anti-lock device, it closes this communication and connects the brake motor of this wheel to a reservoir (21, 22) of fluid under low pressure specific to each sub-circuit, and two switching slides per sub-circuit isolating the brake motors from the working chamber of the master cylinder during the operation of the pump (45, 46) associated with the anti-lock device, in the anti-lock mode said pump sucking the fluid from said specific reservoir (21, 22), said anti-skid system for driving and braking wheels comprising a differential valve (71-74) for each free wheel or driving wheel, essentially consisting of one of said slides one face of which receives the pressure prevailing in the associated brake motor (31-34) and the other that generated by the pump (45, 46), putting, at rest, the working chamber of the master cylinder (1) in communication with said inlet of pressurized fluid of the solenoid valve, characterized in that it further comprises, per sub-circuit, a differential pressure/underpressure valve (76, 77) which is controlled by the pressure prevailing in the brake motor associated with the free wheel and which, at rest, closes a communication between the working chamber of the master cylinder (1) and the suction inlet of the pump (45, 46), which communication it opens in the event of an underpressure in the corresponding brake motor (31, 33) if, and only if, there is no pressure generated by the master cylinder (1).

2. Anti-skid system according to claim 1, characterized in that said differential pressure/underpressure valve comprises, in a body (81), an orifice (82) connected to the working chamber of the master cylinder and an orifice (83) connected to the suction inlet of the pump (46, 45), between which a shutter (84) closes communication at rest, and a chamber (85) separated into two parts by means of a flexible diaphragm (86), one being connected to the atmosphere and the other to the corresponding brake motor (33, 31), a piston (87), passing through a bore made opposite said shutter (84) and fastened to said diaphragm (86), being capable of opening the shutter (84) in the event of underpressure in the associated brake motor (33, 31), if there is no pressure at the orifice (82) connected to the master cylinder (1).

3. Anti-skid system according to claim 2, characterized in that a non-return valve (79, 78) is arranged between the three-way solenoid valve (53, 51) associated with the brake motor (33, 31) of a free wheel and said specific reservoir (21, 22).

4. Anti-skid system according to claim 1, characterized in that said differential pressure/underpressure valve comprises, in a body (81), an orifice (82) connected to the working chamber of the master cylinder and an orifice (83) connected to the suction inlet of the pump (46, 45), between which a shutter (84) closes communication at rest, and a chamber (85) separated into two parts by means of a flexible diaphragm (86), one being connected to the atmosphere and the other to the suction inlet (37, 35) of the corresponding pump, a piston (90) carrying the said shutter (84) and being loaded by the pressure prevailing in the brake motor (33, 31) of said free wheel, a needle (88) fastened to said diaphragm (86) being capable of opening the shutter (84) in the event of underpressure in the associated brake motor (33, 31) when the pump (46, 45) is set in operation.

## Patentansprüche

1. Antischlupfsystem für die angetriebenen Räder und Bremssystem für ein Kraftfahrzeug, dessen Bremssystem zwei hydraulische Bremskreise umfaßt, die jeweils den Bremszylinder (32, 34) eines angetriebenen Rades und den Bremszylinder (31, 33) eines freien Rades mit einer Arbeitskammer eines Hauptzylinders (1) verbinden, der mit einem Hauptreservoir (20) für unter niedrigem Druck stehende Flüssigkeit verbunden ist, sowie eine Antiblockiervorrichtung für die Räder beim Bremsen, die für jedes der Räder ein Dreiwege-Magnetventil (51 - 54) enthält, welches normalerweise eine Verbindung zwischen einem Einlaß für unter niedrigem Druck stehende Flüssigkeit und dem diesem Rad zugehörigen Bremszylinder herstellt, während es in einer Druckminderungsphase der Antiblockiervorrichtung diese Verbindung schließt und den Bremszylinder dieses Rades mit einem jedem Bremskreis eigenen Reservoir (21, 22) für unter niedrigem Druck stehende Flüssigkeit verbindet, und zwei Umschaltschieber für jeden Bremskreis, die die Bremszylinder von der Arbeitskammer des Hauptzylinders während des Betriebs der der Antiblockiervorrichtung zugehörigen Pumpe (45, 46) trennen, wobei diese Pumpe bei der Antiblockierfunktion die Flüssigkeit aus dem spezifischen Reservoir (21, 22) ansaugt, wobei das Antischlupfsystem für die angetriebenen Räder und Bremssystem ein Differenzventil (71 - 74) für jedes freie oder angetriebene Rad enthält, welches im wesentlichen durch einen der Schieber gebildet ist, dessen Fläche mit dem in dem zugehörigen Bremszylinder (31 - 34) herrschenden Druck und dessen andere Fläche mit dem durch die Pumpe (45, 46) erzeugten Druck beaufschlagt wird und der im Ruhezustand die Arbeitskammer des Hauptzylinders (1) und den Eingang für unter Druck stehende Flüssigkeit des Magnetventils verbindet, dadurch gekennzeichnet, daß es außerdem für jeden Bremskreis ein Druck/Unterdruck-Differenzventil (76, 77) enthält, welches von dem Druck gesteuert wird, der in dem dem freien Rad zugeordneten Bremszylinder herrscht und welches in der Ruhestellung eine Verbindung zwischen der Arbeitskammer des Hauptzylinders (1) und der Ansaugöffnung der Pumpe (45, 46) schließt und diese Verbindung im Falle eines Unterdrucks im zugehörigen Bremszylinder (31, 33) ausschließlich dann öffnet, wenn im Hauptzylinder (1) kein Druck erzeugt wird.

2. Antischlupfsystem nach Anspruch 1, dadurch gekennzeichnet, daß das Druck/Unterdruck-Differenzventil in einem Gehäuse (81) eine mit der Arbeitskammer des Hauptzylinders verbundene Öffnung (82) und eine mit der Ansaugöffnung der Pumpe (46, 45) verbundene Öffnung (83) enthält, zwischen denen ein Verschlußkörper (84) in der Ruhestellung eine Verbindung schließt, sowie eine Kammer (85), die durch eine flexible Membran (86) in zwei Abschnitte geteilt ist, von denen der eine mit der Atmosphäre und der andere mit dem zugehörigen Bremszylinder (33, 31) verbunden ist, und einen Kolben (87), der durch eine gegenüber dem Verschlußkörper (84) ausgebildete Bohrung geführt und mit der Membran (86) verbunden ist und der in der Lage ist, den Verschlußkörper (84) im Falle eines Unterdrucks im zugehörigen Bremszylinder (33, 31) zu öffnen, wenn in der mit dem Hauptzylinder (1) verbundenen Öffnung (82) kein Druck herrscht.

3. Antischlupfsystem nach Anspruch 2, dadurch gekennzeichnet, daß ein Rückschlagventil (79, 78) zwischen dem Dreiwege-Magnetventil (53, 51), welches dem Bremszylinder (33, 31) eines freien Rades zugeordnet ist, und dem spezifischen Reservoir (21, 22) angeordnet ist.

4. Antischlupfsystem nach Anspruch 1, dadurch gekennzeichnet, daß das Druck/Unterdruck-Differenzventil in einem Gehäuse (81) eine mit der Arbeitskammer des Hauptzylinders verbundene Öffnung (82) und eine mit der Ansaugöffnung der Pumpe (46, 45) verbundene Öffnung (83) enthält, zwischen denen ein Verschlußkörper (84) in der Ruhestellung eine Verbindung schließt, sowie eine Kammer (85), die durch eine flexible Membran (86) in zwei Abschnitte unterteilt ist, von denen einer mit der Atmosphäre und der andere mit der Ansaugöffnung (37, 35) der zugehörigen Pumpe verbunden ist, und einen Kolben (90), der den Verschlußkörper (84) trägt und von dem Druck beaufschlagt wird, der in dem Bremszylinder (33, 31) des freien Rades herrscht, wobei eine mit der Membran (86) verbundene Nadel (88) in der Lage ist, den Verschlußkörper (84) im Falle eines Unterdrucks im zugehörigen Bremszylinder (33, 31) zu öffnen, wenn die Pumpe (46, 45) sich in Betrieb setzt.
